Europäisches Patentamt

European Patent Office

Office européen des brevets

(19)

(11) **EP 1 371 154 B1**

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(21) Anmeldenummer: **01986812.4**

(22) Anmeldetag: **27.09.2001**

(51) Int Cl.⁷: **H04B 10/08**, H04B 10/18

(86) Internationale Anmeldenummer:
**PCT/DE2001/003780**

(87) Internationale Veröffentlichungsnummer:
**WO 2002/032021 (18.04.2002 Gazette 2002/16)**

(54) **ANORDNUNG UND VERFAHREN FÜR EINE OPTISCHE INFORMATIONSÜBERTRAGUNG**

SYSTEM AND METHOD FOR AN OPTICAL INFORMATION TRANSMISSION

DISPOSITIF ET PROCEDE DE TRANSMISSION OPTIQUE D'INFORMATIONS

(84) Benannte Vertragsstaaten:
**DE FR GB IT**

(30) Priorität: **09.10.2000 DE 10050266**
**02.11.2000 DE 10054400**

(43) Veröffentlichungstag der Anmeldung:
**17.12.2003 Patentblatt 2003/51**

(73) Patentinhaber: **Noe, Reinhold**
**33100 Paderborn (DE)**

(72) Erfinder: **Noe, Reinhold**
**33100 Paderborn (DE)**

(56) Entgegenhaltungen:
WO-A-98/36256          US-A- 4 764 980
US-A- 6 104 515

• **ANDRESCIANI D ET AL: "MEASUREMENT OF THE GROUP-DELAY DIFFERENCE BETWEEN THE PRINCIPAL STATES OF POLARIZATION ON A LOW-BIREFRINGENCE TERRESTRIAL FIBER CABLE" OPTICS LETTERS, OPTICAL SOCIETY OF AMERICA, WASHINGTON, US, Bd. 12, Nr. 10, Oktober 1987 (1987-10), Seiten 844-846, XP000995460 ISSN: 0146-9592**
• **HEISMANN F ET AL: "ELECTROOPTIC POLARIZATION SCRAMBLERS FOR OPTICALLY AMPLIFIED LONG-HAUL TRANSMISSION SYSTEMS" IEEE PHOTONICS TECHNOLOGY LETTERS, IEEE INC. NEW YORK, US, Bd. 6, Nr. 9, 1. September 1994 (1994-09-01), Seiten 1156-1158, XP000468090 ISSN: 1041-1135 in der Anmeldung erwähnt**

EP 1 371 154 B1

**Beschreibung**

Die Erfindung betrifft eine Anordnung sowie ein dazugehöriges Verfahren für eine optische Informationsübertragung nach dem Oberbegriff der unabhängigen Patentansprüche 1 und 10.

Polarisationsmodendispersion, genannt PMD, beeinträchtigt die hochratige optische Datenübertragung. In R. Noe et al., J. Lightwave Techn., 1999, Seiten 1602-1616 wurde ein Verfahren zur Messung von Polarisationsmodendispersion angegeben. Dieses Verfahren beruht auf einer Spektralanalyse des empfängerseitig aus dem intensitätsmodulierten optischen Signal gewonnenen elektrischen detektierten Signals. Nachteilig ist, daß das dabei gewonnene Regelsignal und die einhergehende Schließung des Augenmusters etwa proportional zueinander sind. Dies bedeutet, daß man Verzerrungen durch Polarisationsmodendispersion erst erkennt, wenn sie sich bereits ungünstig auswirken.

Die Lösung des Problems liegt darin, daß der optische Empfänger eine Steuereinheit zur Messung der Laufzeitänderungen mindestens eines vorhandenen optischen Signals aufweist. Der optische Sender wird außerdem so ausgebildet, daß er mindestens ein Signal aussendet, das oder die in ihrer Gesamtheit verschiedene Polarisationen aufweisen, so daß diese bei vorhandener Polarisationsmodendispersion verschieden große Laufzeiten erfahren, und daß der optische Empfänger die Signallaufzeiten oder deren Änderungen detektiert. Das so gewonnene Regelsignal kann zur Steuerung z.B. eines empfängerseitig vorgesehenen Kompensators von Polarisationsmodendispersion verwendet werden.

Aufgabe der Erfindung ist es daher, eine Anordnung sowie ein dazugehöriges Verfahren für eine optische Informationsübertragung anzugeben, welche selbst sehr kleine durch Polarisationsmodendispersion verursachte Verzerrungen mit geringem Aufwand zu messen gestatten.

Diese Aufgabe wird durch eine im Patentanspruch 1 angegebene Anordnung sowie durch ein im Patentanspruch 10 angegebenes Verfahren gelöst.

Vorteilhafte Weiterbildungen sind in den Unteransprüchen angegeben.

In der Patentschrift US-A-4 764 980 (Sakaguchi et al.) ist eine Anordnung zur Messung von Laufzeitänderungen eines optischen Signals angegeben. Dabei ist die Übertragung eines Referenzsignals vom Sender zum Empfänger in einer eigens vorgesehenen, von der Übertragungsstrecke unabhängigen Verbindung notwendig. Außerdem lassen sich mit keine durch Polarisationsmodendispersion (PMD) bewirkten differentiellen Gruppenlaufzeiten messen. In der Patentschrift US-A-6 104 515 (Cao) ist eine Anordnung zur Kompensation von PMD angegeben. Eine Messung von differentiellen Gruppenlaufzeiten als direkte Folge und Manifestation von PMD findet dagegen nicht statt.

Bei der weit verbreiteten Intensitätsmodulation eines wenigstens näherungsweise vollständig polarisierten Lichtsignals ist zur Durchführung des Verfahrens sendeseitig ein Polarisationsverwürfler vorzusehen. Empfängerseitig wird das Steuersignal des den wiedergewonnenen Bittakt bereitstellenden spannungsgesteuerten Oszillators ausgewertet. Die Schwankungen seines Integrals in dem Frequenzbereich, in welchem die Signale zur Ansteuerung des Polarisationsverwürflers liegen, sind ein Maß für vorhandene Polarisationsmodendispersion.

In einem anderen Ausführungsbeispiel wird Polarisationsmultiplex und ein vom Non-Return-to-Zero-Signalformat verschiedenes Signalformat wie z.B. das Return-to-Zero-Signalformat, verwendet, wobei die Phasendifferenz zwischen den Polarisationsmultiplexsignalen veränderlich ist. Empfängerseitig wird die von Polarisationsmodendispersion und meist auch der Phasendifferenz abhängige zeitliche Position des wiedergewonnenen Datensignaltaktes in mindestens einem Polarisationsmultiplexkanal ausgewertet. Auch hier erfolgt dies vorzugsweise durch Auswertung des Frequenzsteuersignals eines spannungsgesteuerten Oszillators, der den wiedergewonnenen Bittakt bereitstellt.

Die Erfindung wird anhand von Ausführungsbeispielen näher erläutert.

Es zeigen

Figur 1     eine erfindungsgemäße Anordnung zur Informationsübertragung,
Figur 2     einen Polarisationsmultiplex-Sender mit einem Laser,
Figur 3     eine erfindungsgemäße Anordnung zur Informationsübertragung,
Figur 4     eine alternative Ausgestaltung eines Polarisationsdemultiplexers,
Figur 5     einen erfindungsgemäßen Empfänger,
Figur 6     einen Phasenvergleicher,
Figur 7     Augenmuster,
Figur 8     eine Signalverarbeitungseinheit,
Figur 9     eine gemeinsame Steuereinheit,
Figur 10     eine weitere Signalverarbeitungseinheit.

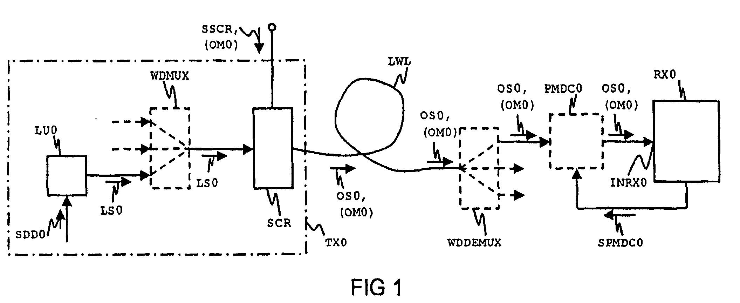

In einer erfindungsgemäßen Anordnung zur Informationsübertragung gemäß **Figur 1** wird in einem ersten optischen Sender TX0 ein vorzugsweise intensitätsmoduliertes erstes Lasersignal LS0 erzeugt. Dazu kann im ersten optischen Sender TX0 beispielsweise ein erstes sendeseitiges Modulationssignal SDD0 einer Lasereinheit LU0 mit einem Laser und ggf. einem Modulator zugeführt werden. Das erste Lasersignal LS0 kann einen Multiplexer WDMUX durchlaufen, der die Addition weiterer Lasersignale mit anderen optischen Trägerfrequenzen zuläßt. Anschließend durchläuft es einen Polarisationsverwürfler SCR. Ggf. notwendige optische und/oder elektrische Verstärker sind hier und in den folgende Figuren der Übersichtlichkeit halber nicht dargestellt. Bei Verwendung des Multiplexers WDMUX wird der Polarisationsverwürfler SCR vorzugsweise zur Verwürflung der Polarisationen aller vorhandenen Lasersignale ausgelegt. Der Polarisationsverwürfler SCR erzeugt zeitvariante Ausgangspolarisationen des ersten Lasersignals LS0, deren normierte Stokes-Vektoren vorzugsweise nicht sämtlich in einer Ebene liegen und vorzugsweise so ausgebildet sind, daß die durch zeitliche Mittelung entstehende Korrelationsmatrix der normierten Stokes-Vektoren proportional zur Einheitsmatrix ist, genauer gesagt, etwa 1/3 mal die Einheitsmatrix ist.

Zu diesem Zweck besteht der Polarisationsverwürfler SCR vorzugsweise aus mehreren elektrooptischen optischen Wellenplatten, die mit unterschiedlichen Geschwindigkeiten rotieren, wobei abwechselnd aufeinanderfolgende Viertel- und Halbwellenplatten vorteilhaft sind. Stattdessen können akustooptische oder elektrooptische Modenwandler mit vorzugsweise hälftiger und voller Modenkonversion eingesetzt werden. Wenigstens näherungsweise geeignete Polarisationsverwürfler SCR sind beispielsweise in M. Rehage et al., "Single- and Double-Stage Acoustooptical Ti:LiNbO$_3$ TE-TM Converters used in Wavelength-Selective Polarimeter and Polarization-Independent Depolarizer", European Symposium on Advanced Networks and Services, Conference on Passive Fiber-Optic System Components, 2449-45, 20-24 March 1995, Amsterdam, in F. Heismann et al., "Electrooptic polarization scramblers for optically amplified long-haul transmission systems", IEEE Photonics Technology Letters 6(1994)9, S. 1156-1158 oder in B.H. Billings, "A monochromatic depolarizer", J. Opt. Soc. Amer., vol. 41, pp. 966-975, 1951 beschrieben. Auch der in R. Noé et al., "Integrated optical LiNbO$_3$ distributed polarization mode dispersion equalizer in 20 Gbit/s transmission system", Electronics Letters 35(1999)8, S. 652-654 beschriebene Kompensator von Polarisationsmodendispersion eignet sich bei Ansteuerung mit Wechselsignalen, vorzugsweise Sinus- und Kosinussignalen, die verschiedene Frequenzen haben können, als Polarisationsverwürfler SCR. Der Polarisationsverwürfler SCR erhält mindestens ein Polarisationsverwürflersignal SSCR mit mindestens einer ersten Modulationsfrequenz OM0. Er gibt ausgangsseitig ein erstes optisches Signal OS0 ab, welches variable Polarisation aufweist und in welchem sich auch die erste Modulationsfrequenz OM0 manifestiert.

Nach Durchlaufen eines Lichtwellenleiters LWL, welcher Polarisationsmodendispersion, genannt PMD, und polarisationsabhängige Verluste, genannt PDL, aufweisen kann, kann das erste optische Signal OS0 einen Demultiplexer WDDEMUX durchlaufen, der ggf. vorhandene weiterer optische Signale mit anderen Trägerfrequenzen abspaltet. Danach kann es einen ersten Kompensator von Polarisationsmodendispersion PMDC0 durchlaufen. Dieser besteht z.B. aus einem oder mehreren vorzugsweise als endlos ausgebildeten Polarisationstransformatoren, die jeweils von einem Wellenleiterstück mit Polarisationsmodendispersion gefolgt werden, wobei die dadurch gebildeten Einheiten kaskadiert werden. Auch durchgehende doppelbrechende Wellenleiter mit eingebauten steuerbaren Modenwandlern sind geeignet. Beispiele sind in R. Noé et al., "Polarization mode dispersion compensation at 10, 20 and 40 Gb/s with various optical equalizers", IEEE J. Lightwave Technology, 17(1999)9, S. 1602-1616 und in R. Noé et al., "Integrated optical LiNbO$_3$ distributed polarization mode dispersion equalizer in 20 Gbit/s transmission system", Electronics Letters 35(1999)8, S. 652-654 beschrieben.

Schließlich wird das erste optische Signal OS0 einem ersten Empfängereingang INRX0 eines als wenigstens näherungsweise polarisationsunabhängig ausgelegten ersten Empfängers RX0, welcher hier als optischer Empfänger für intensitätsmodulierte Signale ausgelegt ist, zugeführt. Der erste Empfänger RX0 wird später beschrieben. Er kann mindestens ein erstes PMD-Steuersignal SPMDC0 zur Steuerung des ersten Kompensators von Polarisationsmodendispersion PMDC0 abgeben.

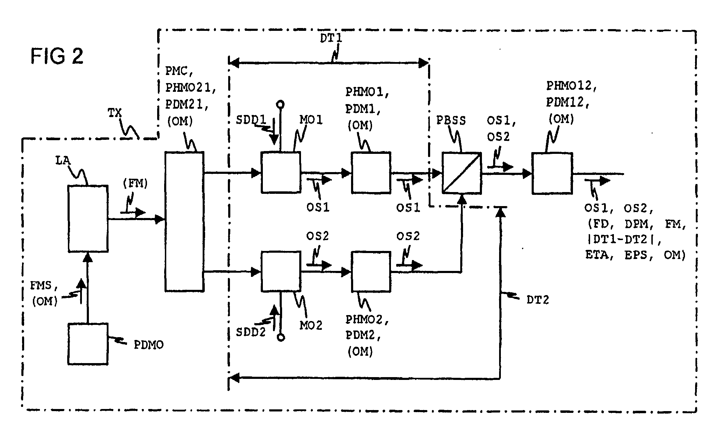

In einem anderen Ausführungsbeispiel der Erfindung wird optisches Polarisationsmultiplex eingesetzt. In einem dazu geeigneten gemeinsamen optischen Sender TX gemäß **Figur 2** wird das Ausgangssignal eines vorzugsweise gepulsten Sendelasers LA durch einen sendeseitigen Leistungsteiler PMC mit etwa gleichen mittleren Leistungen auf zwei Lichtwellenleiter aufgeteilt. Der sendeseitige Leistungsteiler PMC kann z.B. ein polarisationserhaltender Faserkoppler sein. Die so gewonnenen Signale werden durch je einen Modulator MO1, MO2 geleitet, welcher bevorzugt als Intensitätsmodulator ausgebildet ist und wo sendeseitige Modulationssignale SDD1 bzw. SDD2 aufgeprägt und so zwei weitere optische Signale OS1, OS2 geschaffen werden. Diese sind hier moduliert mit dem sogenannten Return-to-Zero-Signalformat. Auch andere Modulations- oder Signalformate mit einer während einer Bitdauer nicht konstanten komplexen Hüllkurve können verwendet werden. Dazu gehört beispielsweise die Phasenumtastung zwischen aufeinanderfolgenden Bits. OS1 ist ein erstes und OS2 ist ein zweites der weiteren optischen Signale. Diese werden durch einen sendeseitigen Polarisationsstrahlteiler PBSS mit vorzugsweise orthogonalen Polarisationen kombiniert. Statt des sendeseitigen Polarisationsstrahlteilers PBSS kann auch ein einfacher optischer Richtkoppler verwendet werden.

Für die Verbindungen zwischen den Modulatoren MO1, M02 und dem sendeseitigen Polarisationsstrahlteiler PBSS können z.B. ebenfalls polarisationserhaltende Lichtwellenleiter vorgesehen werden, von denen einer um 90° tordiert ist. Alternativ dazu kann in einer dieser Verbindungen ein Modenwandler vorgesehen werden.

Um in diesem Ausführungsbeispiel der Erfindung eine gewünschte Kohärenz der weiteren optischen Signale OS1, OS2 nach der Kombinierung zu erzielen, ist eine differentielle Phasenmodulation DPM zwischen diesen weiteren optischen Signalen OS1, OS2 vorhanden, welche von einem phasendifferenzmodulierenden Mittel erzeugt wird. Phasendifferenzmodulierende Mittel PDM1, PDM2, PDM12, PDM21, die alternativ oder additiv eingesetzt werden können, sind Winkelmodulatoren PHMO1, PHMO2 eines der weiteren optischen Signale OS1, OS2 oder differentielle Winkelmodulatoren PHMO12, PHMO21. Differentiell bedeutet dabei, daß die Winkelmodulation zwischen den im Idealfall orthogonal zueinander polarisierten weiteren optischen Signalen OS1, OS2 wirksam ist. Im Fall einer dabei erzeugten Frequenzverschiebung ist im Ausgangslichtwellenleiter eine Frequenzdifferenz FD vorhanden. Frequenzverschieber, auch differentielle, die sich zur Realisierung dieser ersten phasendifferenzmodulierenden Mittel PDM1, PDM2, PDM12, PDM21 eignen, können insbesondere akustooptisch oder elektrooptisch arbeiten, im Fall der nicht gleichzeitig einer Leistungsteilung dienenden phasendifferenzmodulierenden Mittel PDM1, PDM2, PDM12 vorzugsweise mit voller Modenkonversion. Auch ein sendeseitiger Leistungsteiler PMC kann als phasendifferenzmodulierendes Mittel PDM21 dienen, beispielsweise bei Realisierung durch einen als Frequenzverschieber arbeitenden akustooptischen Modenkonverter mit hälftiger Leistungskonversion, der von einem Polarisationsstrahlteiler gefolgt wird.

In einem weiteren Ausführungsbeispiel eines Polarisationsmultiplex-Senders wird der Sendelaser LA mit einem optischen Frequenzmodulationssignal FMS beaufschlagt, das aus einem weiteren phasendifferenzmodulierenden Mittel PDM0 bereitgestellt wird. Beispielsweise wirkt sich eine sinusförmige optische Frequenzmodulation FM mit einem Hub von einigen 100 MHz kaum auf die Sendebandbreite eines 40Gb/s-Senders aus. Durch einen von Null verschieden gewählten Laufzeitdifferenzbetrag |DT1-DT2| zwischen den optischen Laufzeiten DT1, DT2 der durch die Modulatoren MO1, MO2 laufenden weiteren optischen Signale OS1, OS2 zwischen sendeseitigem Leistungsteiler PMC und sendeseitigem Polarisationsstrahlteiler PBSS wird die optische Frequenzmodulation FM in die gewünschte differentielle Phasenmodulation DPM der weiteren optischen Signale OS1, OS2 hinter dem sendeseitigen Polarisationsstrahlteiler PBSS umgewandelt. Sie besitzt ein Spektrum, welches von dem der optischen Frequenzmodulation FM abhängt. Die differentielle Phasenmodulation DPM addiert sich zu einem statischen Differenzphasenwinkel EPS, welcher zu einem bestimmten Zeitpunkt zwischen den weiteren optischen Signalen OS1, OS2 auftritt.

Der Laufzeitdifferenzbetrag |DT1-DT2| wird vorzugsweise gleich einem ganzzahligen Vielfachen der Symboldauer, d. h. des Abstandes aufeinanderfolgender Pulse des Sendelasers LA gewählt. In Ausführungsbeispielen, in welchen der Sendelaser LA nicht mit dem optischen Frequenzmodulationssignal FMS beaufschlagt wird, wird der Laufzeitdifferenzbetrag |DT1-DT2| vorzugsweise gleich Null gewählt.

Das phasendifferenzmodulierende Mittel PDM1, PDM2, PDM12, PDM21, PDM0 erhält mindestens ein Ansteuersignal mit mindestens einer weiteren Modulationsfrequen OM, die sich auch in der differentiellen Phasenmodulation DPM manifestiert.

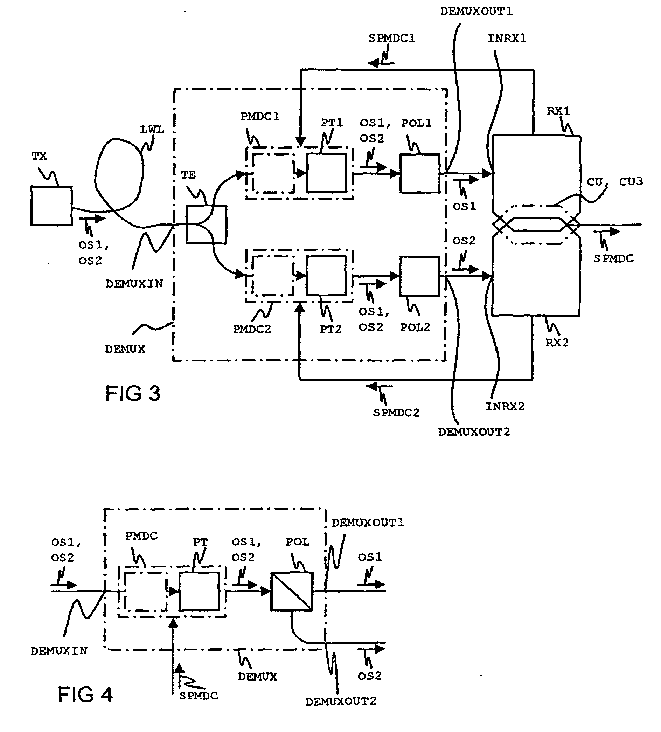

**Figur 3** zeigt eine erfindungsgemäße Anordnung zur Informationsübertragung mit Polarisationsmultiplex. Die weiteren optischen Signale OS1, OS2 werden dem gemeinsamen Sender TX entnommen und über den Lichtwellenleiter LWL übertragen. Empfängerseitig werden die weiteren optischen Signale OS1, OS2 in einem empfängerseitigen Leistungsteiler TE auf zwei Empfängerzweige aufgeteilt, wobei der Eingang des empfängerseitigen Leistungsteilers TE gleichzeitig der Polarisationsdemultiplexereingang DEMUXIN eines Polarisationsdemultiplexers DEMUX ist. In den Empfängerzweigen kann je ein weiterer Kompensator von Polarisationsmodendispersion PMDC1, PMDC2 vorgesehen sein, welcher die im Lichtwellenleiter LWL durch PMD verursachten Verzerrungen wieder ausgleichen soll. Die weiteren optischen Signale OS1, OS2 durchlaufen auch jeweils einen vorzugsweise als endlos ausgebildeten ersten und zweiten Polarisationstransformator PT1, PT2. Dieser kann auch ein den folgenden ersten und zweiten polarisationssensitiven Elementen POL1, POL2 zugewandter Teil des jeweiligen weiteren Kompensators von Polarisationsmodendispersion PMDC1, PMDC2 sein. Nach Durchlaufen der ersten bzw. zweiten Polarisationstransformatoren PT1, PT2 werden die weiteren optischen Signale OS1, OS2 einem ersten bzw. zweiten polarisationssensitiven Element POL1, POL2 zugeführt, welche hier als Polarisatoren ausgeführt sind. Dabei selektieren im Idealfall-beispielsweise das erste bzw. zweite polarisationssensitive Element POL1 bzw. POL2 wenigstens im zeitlichen Mittel wenigstens näherungsweise das erste bzw. zweite optische Signal OS1, OS2. Die Ausgangssignale des ersten und zweiten polarisationssensitiven Elements POL1, POL2 sind hier jeweils optische Signale, könnten in einem kohärenten optischen Empfänger, welcher eine Polarisationssensitivität entsprechend der Polarisation des lokalen Lasers besitzt, aber auch elektrische Überlagerungssignale sein.

Die Ausgänge des ersten und zweiten polarisationssensitiven Elements POL1, POL2 sind gleichzeitig Polarisationsdemultiplexausgänge DEMUXOUT1, DEMUXOUT2 des Polarisationsdemultiplexers DEMUX, die mit je einem ersten und zweiten weiteren Empfängereingang INRX1, INRX2 je eines ersten und zweiten weiteren Empfängers RX1, RX2, welche hier als optische Empfänger für intensitätsmodulierte Signale ausgelegt sind, verbunden sind. Erster und zweiter weiterer Empfänger RX1, RX2 können einen gemeinsamen Teil besitzen, der insbesondere eine gemeinsame Steuereinheit CU oder eine zusätzliche Steuereinheit CU3 sein kann.

**Figur 4** zeigt eine alternative Ausgestaltung des Polarisationsdemultiplexers DEMUX. Die weiteren optischen Signale OS1, OS2 werden einem gemeinsamen, vorzugsweise als endlos ausgebildeten Polarisationstransformator PT zugeleitet. Davor können die weiteren optischen Signale OS1, OS2 durch einen gemeinsamen Kompensator von Polarisationsmodendispersion PMDC geleitet werden, der jedoch auch den gemeinsamen Polarisationstransformator PT enthalten kann und von mindestens einem gemeinsamen PMD-Steuersignal SPMDC angesteuert wird. Zur Realisierung der weiteren und des gemeinsamen Kompensators von Polarisationsmodendispersion PMDC1, PMDC2, PMDC mit darin enthaltenen Polarisationstransformatoren PT1, PT2, PT eignet sich insbesondere die in R. Noé et al., "Integrated optical LiNbO$_3$ distributed polarization mode dispersion equalizer in 20 Gbit/s transmission system", Electronics Letters 35(1999)8, S. 652-654 angegebene Ausführungsform.

Die weiteren optischen Signale OS1, OS2 werden sodann einem vorzugsweise als Polarisationsstrahlteiler ausgebildeten gemeinsamen polarisationssensitiven Element POL zugeleitet. Dessen Ausgänge sind die Polarisationsdemultiplexausgänge DEMUXOUT1, DEMUXOUT2 und geben im Idealfall beispielsweise wenigstens im zeitlichen Mittel wenigstens näherungsweise das erste bzw. zweite weitere optische Signal OS1, OS2 ab. Das Ausführungsbeispiel der Figur 4 ist einfacher als das der Figur 3, dafür ist eine Ausführung gemäß Figur 3 insbesondere in Fällen, bei denen keine Orthogonalität der weiteren optischen Signale OS1, OS2 vorhanden ist, besser geeignet.

Die weiteren Empfänger RX1, RX2 können mindestens je ein weiteres PMD-Steuersignal SPMDC1, SPMDC2 oder mindestens ein gemeinsames PMD-Steuersignal SPMDC zur Steuerung der weiteren und des gemeinsamen Kompensators von Polarisationsmodendispersion PMDC1, PMDC2, PMDC abgeben.

Die Polarisation der Gesamtheit der ggf. anwesenden optischen Signal OS0, OS1, OS2 ergibt sich als Polarisationszustand aller jeweils gleichzeitig anwesenden superponierten optischen Signale OS0, OS1, OS2. Der erste optische Sender TX0 gibt als diese Gesamtheit lediglich das erste optische Signal OS0 ab. Der gemeinsame optische Sender TX gibt als diese Gesamtheit eines der weiteren oder beide weiteren optischen Signale OS1, OS2 ab.

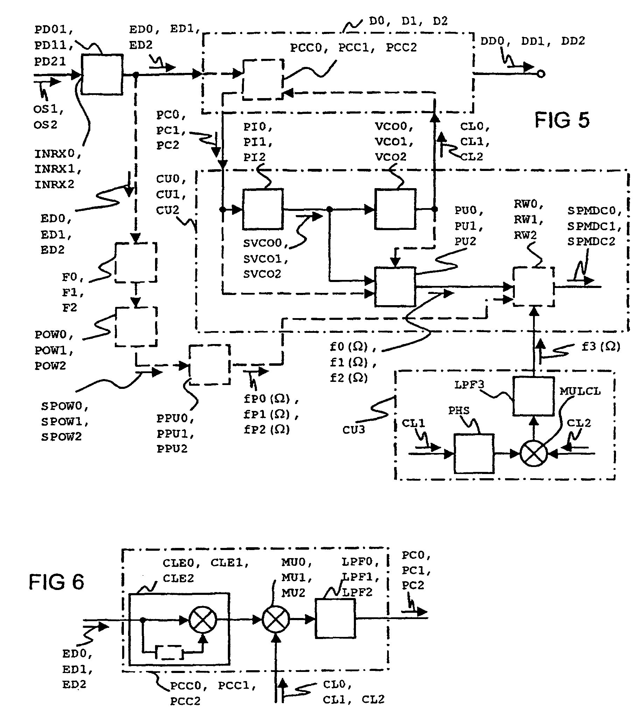

Gemäß **Figur 5** enthält jeder Empfänger RX0, RX1, RX2 einen Photodetektor PD01, PD11, PD21, welcher das erste, das erste weitere bzw. das zweite weitere optische Signal OS, OS1, OS2 detektiert und ein erstes bzw. erstes weiteres bzw. zweites weiteres detektiertes Signal ED0, ED1, ED2 abgibt. Dies ist hier jeweils ein elektrisches Signal. Die detektierten Signale ED0, ED1, ED2 werden je einem ersten, ersten weiteren bzw. zweiten weiteren Digitalempfänger D0, D1, D2 zugeleitet. Die Digitalempfänger D0, D1, D2, welche die detektierten Signale ED0, ED1, ED2 regenerieren, geben je ein Datensignal DD0, DD1, DD2 ab, welches hier aus je einem elektrischen Signal besteht. Bei geeigneter Einstellung der ggf. vorhandenen Kompensatoren von Polarisationsmodendispersion PMDC0, PMDC1, PMDC2, PMDC stimmen die Datensignale DD0, DD1, DD2 mit den sendeseitigen Modulationssignalen SDD0, SDD1, SDD2 überein. Dies ist im Betrieb typischerweise gegeben; gelegentliche Bitfehler der Datensignale DD0, DD1, DD2 beeinträchtigen die Funktion der Erfindung allenfalls unwesentlich.

Der Digitalempfänger D0, D1, D2 gibt auch ein Phasenvergleichssignal PC0, PC1, PC2 ab, welches angibt, ob die Flanken des Taktsignals CL0, CL1, CL2 im Mittel zu früh, gerade richtig oder zu spät dem Digitalempfänger D0, D1, D2 zugeleitet werden. Üblicherweise wird das Phasenvergleichssignal PC0, PC1, PC2 so ausgelegt, daß seine Polarität und Amplitude die Richtung und die Größe des zeitlichen Fehlers angibt; der Wert Null entspricht dann zeitlich perfekt liegenden Flanken des Taktsignals CL0, CL1, CL2.

Der erste Empfänger RX0 weist eine erste Steuereinheit CU0 auf. Die zwei weiteren Empfänger RX1, RX2 können je eine erste bzw. zweite weitere Steuereinheit CU1, CU2 aufweisen. Von einem ersten, bzw. zwei weiteren spannungsgesteuerten Oszillatoren VCO0 VCO1, VCO2 werden ein erstes Taktsignal CL0 bzw. zwei weitere Taktsignale CL1, CL2, welches bzw. welche den Regenerationsprozeß steuern, an den oder die Digitalempfänger D0, D1, D2 abgegeben.

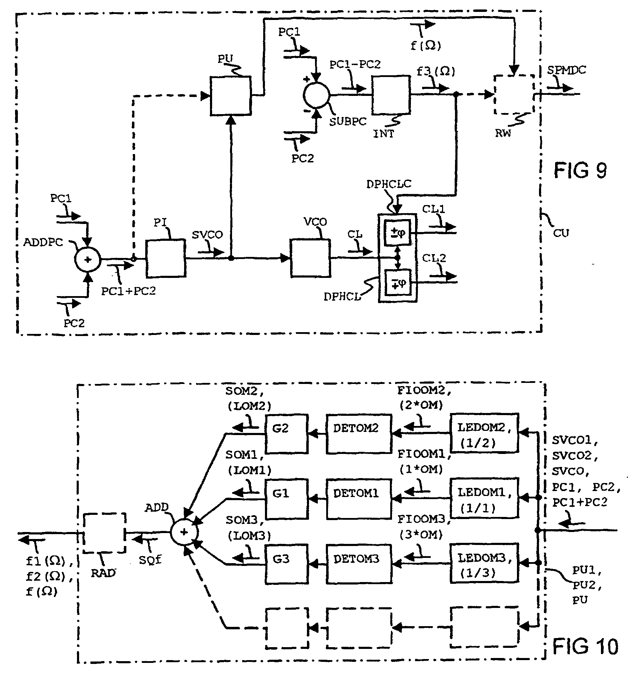

Die zwei weiteren Empfänger RX1, RX2 können statt oder zusätzlich zu den zwei weiteren Steuereinheiten CU1, CU2 auch eine in **Figur 9** dargestellte gemeinsame Steuereinheit CU aufweisen. In ihr wird von einem gemeinsamen spannungsgesteuerten Oszillator VCO ein gemeinsames Taktsignal CL abgegeben, welches in einem differentiellen Taktphasenschieber DPHCL mit wählbarer Phasendifferenz so aufgeteilt wird, daß die zwei weiteren Taktsignale CL1, CL2 resultieren. Die wählbare Phasendifferenz wird vorzugsweise monoton als Funktion eines an einem Taktphasensteuersignaleingang DPHCLC liegenden Signals gesteuert.

Ein erster bzw. zwei weitere bzw. ein gemeinsamer Taktsignalregler PI0, PI1, PI2, PI, welche typischerweise als Proportional-Integral-Regler ausgelegt sind, werden durch das erste bzw. die zwei weiteren Phasenvergleichssignale PC0, PC1, PC2 bzw. durch die ein gemeinsames Phasenvergleichssignal PC1+PC2 darstellende, in einem Addierer ADDPC gebildete Summe der zwei weiteren Phasenvergleichssignale PC1, PC2 angesteuert und steuern durch ein erstes bzw. zwei weitere bzw. ein gemeinsames Frequenzsteuersignal SVCO0, SVCO1, SVCO2 die Frequenz des ersten bzw. der zwei weiteren bzw. des gemeinsamen spannungsgesteuerten Oszillators VCO0, VCO1, VCO2, VCO. Die innerhalb des Digitalempfängers D0, D1, D2 liegende Einrichtung zur Gewinnung des Phasenvergleichssignals PC0, PC1, PC2, der Taktsignalregler PI0, PI1, PI2, PI und der spannungsgesteuerte Oszillator VCO0, VCO1, VCO2, VCO bilden zusammen einen Phasenregelkreis.

Ausführungsbeispiele für einen Digitalempfänger D0, D1, D2 einschließlich Phasenvergleicher PCC0, PCC1, PCC2 zur Gewinnung des Phasenvergleichssignals PC0, PC1, PC2 sind beispielsweise aus der deutschen Patentanmeldung P 44 43 417.0 bekannt.

Alternativ dazu ist innerhalb des Digitalempfängers D0, D1, D2 im einfachsten Fall ein Phasenvergleicher PCC0, PCC1, PCC2 gemäß **Figur 6** mit einem Taktlinienextrahierer CLE0, CLE1, CLE2 vorgesehen. Der Taktlinienextrahierer CLE0, CLE1, CLE2 multipliziert das detektierte Signal ED0, ED1, ED2 mit sich selbst; wobei eines der dem Taktlinienextraktor CLE0, CLE1, CLE2 zugeführten Signale gegenüber dem anderen z.B. um eine halbe Bitdauer verzögert sein kann. Er gibt ein Signal an einen Eingang eines Multiplizierers MU0, MU1, MU2 ab. Ein weiterer Eingang des Multiplizierers MU0, MU1, MU2 wird vom Taktsignal CL0, CL1, CL2 angesteuert. Am Ausgang des Multiplizierers ist ein Tiefpaßfilter LPF0, LPF1, LPF2 vorgesehen; dessen Ausgangssignal ist das Phasenvergleichssignal PC0, PC1, PC2.

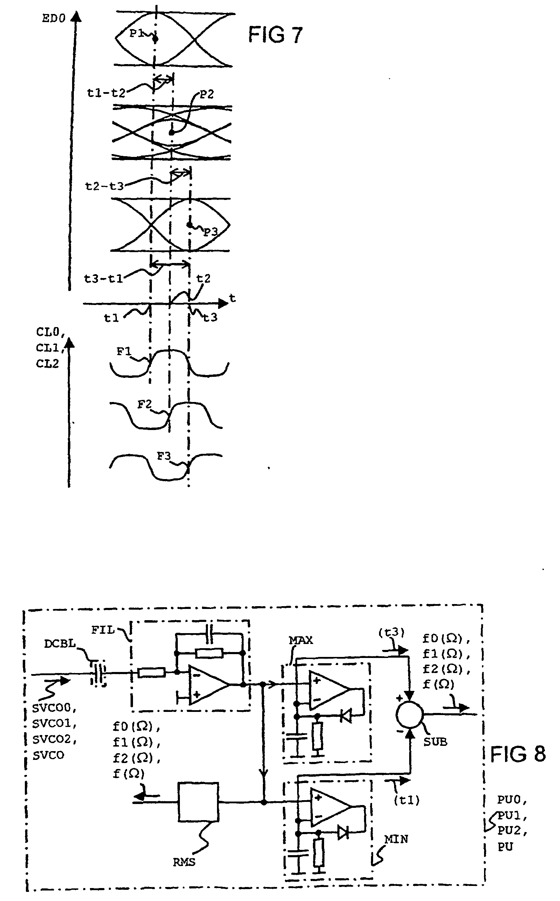

**Figur 7** zeigt oberhalb der die Abtastzeit t angebenden horizontalen Achse Augenmuster des ersten detektierten Signals ED0. Die Triggerung entspricht dem Takt des ersten sendeseitigen Modulationssignals SDD0. Je nach sendeseitiger Polarisation und Polarisationsmodendispersion des Lichtwellenleiters LWL und ggf. ersten PMD-Kompensators PMDC0 ergeben sich verschiedene Augenmuster, deren optimale Abtastpunkte P1, P2, P3 bei verschiedenen Abtastzeitpunkten t1, t2, t3 liegen. Durch den Polarisationsverwürfler SCR ist sichergestellt, daß bei Anwesenheit von Polarisationsmodendispersion wenigstens zwei verschiedene der Abtastzeitpunkte t1, t2, t3 auftreten, wobei Laufzeitänderungen des ersten optischen Signals OS0 durch t1-t2, t2-t3 und t3-t1 gegeben sind und meist nur dem Betrage nach von Bedeutung sind. Idealerweise arbeitet der Polarisationsverwürfler SCR so, daß auch ein extrem früher Abtastzeitpunkt t1 und ein extrem später Abtastzeitpunkt t3 auftreten. Die Differenz t3-t1 dieser extremen Abtastzeitpunkte t1, t3 ist im Fall der Darstellung von Augenmustern des ersten detektierten Signals ED0 wenigstens näherungsweise gleich der vorhandenen differentiellen Gruppenlaufzeit zwischen den Hauptpolarisationen, englisch principal states-of-polarization genannt.

Auch in den zwei weiteren Empfängern RX1, RX2 können je nach momentaner differentieller Phasenmodulation DPM und vorhandener Polarisationsmodendispersion im Lichtwellenleiter LWL und in den weiteren sowie dem gemeinsamen Kompensator von Polarisationsmodendispersion PMDC1, PMDC2, PMDC Augenmuster auftreten, deren optimale Abtastpunkte zu verschiedenen Abtastzeitpunkten t1, t2, t3 erfolgen; dies wird vorzugsweise bei eingeregeltem Polarisationstransformator PT1, PT2, PT gemessen. Figur 7 zeigt unterhalb der die Abtastzeit t angebenden horizontalen Achse Oszillogramme des oder der zu den Abtastzeitpunkten t1, t2, t3 gehörigen Taktsignale CL0, CL1, CL2. Optimale Funktion der Taktrückgewinnungen vorausgesetzt, fallen die Flanken F1, F2, F3 des oder der Taktsignale CL0, CL1, CL2 mit den gewünschten Abtastzeitpunkten t1, t2, t3 zusammen. Die Flanken F1, F2, F3 sind hier die ansteigenden, es könnten aber stattdessen auch die abfallenden Flanken sein oder es könnten in einem gemäß der deutschen Patentanmeldung P 44 43 417.0 ausgebildeten Digitalempfänger D0, D1, D2 auch abwechselnd die ansteigenden und die abfallenden Flanken eines nur die halbe Bittaktfrequenz aufweisenden Taktsignals CL0, CL1, CL2 sein.

Erfindungsgemäß werden Unterschiede zwischen den Abtastzeitpunkten t1, t2, t3, also Laufzeitänderungen t1-t2, t2-t3, t3-t1 ausgewertet und als Maß für vorhandene Polarisationsmodendispersion verwendet. Die Abtastzeit t, welche im Laufe der Zeit beispielsweise zwischen den verschiedenen Abtastzeitpunkten t1, t2, t3 hin- und heroszilliert, ist wenigstens näherungsweise proportional zum Integral des Frequenzsteuersignals SVCO0, SVCO1, SVCO2, SVCO. Das erste bzw. die zwei weiteren bzw. das gemeinsame Frequenzsteuersignal SVCO0, SVCO1, SVCO2, SVCO werden einer ersten bzw. zwei weiteren bzw. einer gemeinsamen Signalverarbeitungseinrichtung PU0, PU1, PU2, PU zugeleitet, welche das Integral oder die zeitlichen Schwankungen des Integrals des ihr zugeleiteten Frequenzsteuersignals SVCO0, SVCO1, SVCO2, SVCO auswertet.

In der Praxis folgt die durch das Taktsignal CL0, CL1, CL2 definierte Abtastzeit t den eigentlich gewünschten Abtastzeitpunkten t1, t2, t3 nur mit einer gewissen, durch die Phasenregelschleife verursachten Verzögerung. Deshalb können von der Signalverarbeitungseinrichtung PU0, PU1, PU2, PU statt des Frequenzsteuersignals SVCO0, SVCO1, SVCO2, SVCO oder bevorzugt zusätzlich zu diesem auch das oder die entsprechenden Phasenvergleichssignale PC0, PC1, PC2, PC1+PC2 verarbeitet werden. Auch eine Verarbeitung der Taktsignale CL0, CL1, CL2 in der ersten und den zwei weiteren Signalverarbeitungseinrichtungen PU0, PU1, PU2 ist möglich.

Die Signalverarbeitungseinrichtung PU0, PU1, PU2, PU gibt ausgangsseitig jeweils mindestens ein erstes, bzw. ein erstes und zweites weiteres bzw. ein gemeinsames Meßsignal f0($\Omega$), f1($\Omega$), f2($\Omega$), f($\Omega$) ab, welches jeweils eine Funktion zumindest des Vektors der Polarisationsmodendispersion $\Omega$ ist, der in der englischen Literatur als PMD vector $\Omega$ bezeichnet wird und im folgenden kurz PMD-Vektor $\Omega$ genannt wird.

Das Meßsignal f0($\Omega$), f1($\Omega$), f2($\Omega$), f($\Omega$) kann einem ersten PMD-Regler RW0, bzw. einem ersten weiteren oder zweiten weiteren PMD-Regler RW1, RW2 bzw. einem gemeinsamen PMD-Regler RW zugeleitet werden, der daraus ein erstes oder die zwei weiteren oder ein gemeinsames PMD-Steuersignal SPMDC0, SPMDC1, SPMDC2, SPMDC ableitet.

Da die Polarisationseinstellung in dem Polarisationsdemultiplexer DEMUX auch von den zwei weiteren bzw. dem gemeinsamen Kompensator von Polarisationsmodendispersion PMDC1, PMDC2, PMDC beeinflußt wird, können die zwei weiteren bzw. das gemeinsame PMD-Steuersignal SPMDC1, SPMDC2, SPMDC auch wenigstens teilweise den ersten und zweiten bzw. den gemeinsamen Polarisationstransformator PT1, PT2, PT ansteuern.

Die Modulationsfrequenz OM0, OM und vorzugsweise auch Vielfache davon werden vorzugsweise so gewählt, daß sie sehr klein gegenüber der Bittaktfrequenz des oder der optischen Signale OS0, OS1, OS2 sind, aber gleichzeitig groß gegenüber der ohne Phasenregelschleife auftretenden Linienbreite des spannungsgesteuerten Oszillators VCO0, VCO1, VCO2, VCO und der Grenzfrequenz der ihn einbindenden Phasenregelschleife. Bei solcher Auslegung besitzen die Meßsignale f0($\Omega$), f1($\Omega$), f2($\Omega$), f($\Omega$) ein besonders hohes Signal-Rausch-Verhältnis; geeignete Modulationsfrequenzen OM0, OM liegen z.B. zwischen 100 kHz und 10 MHz.

In **Figur 8** ist eine Signalverarbeitungseinheit PU0, PU1, PU2, PU näher dargestellt. Das ihr zugeführte Frequenzsteuersignal SVCO0, SVCO1, SVCO2, SVCO wird über einen Gleichsignalblockierer DCBL einem Filter FIL zugeführt, welches als Tiefpaßfilter mit einer vorzugsweise geringer als die Modulationsfrequenz OM0, OM gewählten Grenzfrequenz ausgelegt ist und im Frequenzbereich der Modulationsfrequenz OM0, OM deshalb wenigstens näherungsweise als Integrator wirkt. Das Ausgangssignal des Filters FIL wird einem Maximumhalteeinrichtung MAX und einer Minimumhalteeinrichtung MIN zugeführt. Deren Ausgangssignale sind wenigstens näherungsweise lineare Funktionen der extremen Abtastzeitpunkte t1, t3. Die Ausgangssignale der Maximumhalteeinrichtung MAX und der Minimumhalteeinrichtung MIN werden in einem ersten Subtrahierer SUB subtrahiert. Im Fall der ersten Signalverarbeitungseinrichtung PU0 ergibt sich dabei das erstes Meßsignal f1($\Omega$), welches eine vorzugsweise als linear ausgebildete Funktion der Länge des PMD-Vektors $\Omega$ ist. Im Fall einer der zwei weiteren bzw. der gemeinsamen Signalverarbeitungseinrichtungen PU1, PU2, PU ergibt sich dabei eines der zwei weiteren bzw. das gemeinsame Meßsignal f1($\Omega$), f2($\Omega$), f($\Omega$), welches eine vorzugsweise als linear ausgebildete Funktion der Länge derjenigen zweiten Komponente $\Omega$23 des PMD-Vektors $\Omega$ ist, die im Raum der normierten Stokes-Vektoren senkrecht auf der parallel zu den Polarisationen der weiteren optischen Signale OS1, OS2 liegenden ersten Komponente $\Omega$1 des PMD-Vektors $\Omega$ steht.

In einem alternativen Ausführungsbeispiel wird das Ausgangssignal des Filters FIL einem Effektivwertmesser RMS zugeleitet, dessen Ausgangssignal das erste, bzw. eines der zwei weiteren bzw. das gemeinsame Meßsignal f0($\Omega$), f1($\Omega$), f2($\Omega$), f($\Omega$) ist.

Die Haltezeitkonstanten der Maximumhalteeinrichtung MAX und der Minimumhalteeinrichtung MIN bzw. des Effektivwertmessers RMS werden vorzugsweise so gewählt, daß sie in derselben Größenordnung oder etwas größer als die zur Modulationsfrequenz OM0, OM gehörende Periodendauer liegt.

**Figur 10** zeigt ein alternatives Ausführungsbeispiel einer der weiteren oder der gemeinsamen Signalverarbeitungseinrichtungen PU1, PU2, PU, welches sich aber, ggf. unter geringfügiger Abwandlung, auch als erste Signalverarbeitungsrichtung PU0 einsetzen läßt.

Dabei weist der gemeinsame optische Sender TX eine wenigstens näherungsweise sinusförmige differentielle Phasenmodulation der weiteren Modulationsfrequenz OM auf, was sich beispielsweise durch eine durch ein sinusförmiges Frequenzmodulationssignal FMS erzeugte, wenigstens näherungsweise sinusförmige Frequenzmodulation FM erreichen läßt. Falls die optische Frequenzmodulation FM durch - vorzugsweise sinusförmige - Direktmodulation eines Halbleiterlasers erzeugt wird, besitzen die weiteren optischen Signale OS1, OS2 neben der gewünschten, durch optische Frequenzmodulation FM erzeugten differentiellen Phasenmodulation DPM, die einen Hub ETA besitze, welcher im folgenden als Spitzenhub in Radiant verstanden wird, auch eine unerwünschte Amplitudenmodulation. Diese ist von den empfängerseitig ausgewählten Polarisationszuständen unabhängig und erschwert daher die Auswertung der Laufzeitänderungen t1-t2, t2-t3, t3-t1 der weiteren optischen Signale OS1, OS2. In solchen Fällen kann es günstig sein, Vielfache n*OM, beispielsweise n = 2, 3, 4, ..., der weiteren Modulationsfrequenz OM auszuwerten.

Zumindest bei sinusförmiger Frequenzmodulation FM sind die Amplituden empfängerseitig detektierter gerader (n = 0, 2, 4, ...) und ungerader (n = 1, 3, 5, ...) Vielfacher n*OM der weiteren Modulationsfrequenz OM proportional zu cos bzw. sin eines Phasenwinkels EP, der sich aus der Summe des statischen Differenzphasenwinkels EPS, der empfindlich vom Laufzeitdifferenzbetrag |DT1-DT2| zwischen den optischen Laufzeiten DT1, DT2 abhängt, und einer i.a. unbekannten Winkelablage ergibt. Erfindungsgemäß ist es aber möglich, mindestens ein gerades und gleichzeitig mindestens ein ungerades Vielfaches der weiteren Modulationsfrequenz OM auszuwerten. Dadurch läßt sich ein erstes und zweites weiteres bzw. ein gemeinsames Meßsignal f1($\Omega$), f2($\Omega$), f($\Omega$) gewinnen, welches eine vorzugsweise als linear ausgebildete Funkton von cos^2(EP)+sin^2(EP) = 1 ist, also unabhängig vom Phasenwinkel EP ist.

Als Eingangssignal einer der weiteren oder der gemeinsamen Signalverarbeitungseinrichtungen PU1, PU2, PU dient ein weiteres bzw. gemeinsames Frequenzsteuersignal SVCO1, SVCO2, SVCO oder Phasenvergleichssignal PC1, PC2, PC1+PC2. Es wird mehreren Bandpaßfiltern LEDOMn mit n=1,2,3,... zugeführt, die jeweils das entsprechende Vielfache n*OM der weiteren Modulationsfrequenz OM selektieren. Der Betrag der Übertragungsfunktion des Bandpaßfilters LEDOMn besitze denjenigen Wert, der erforderlich ist, damit sein Ausgangssignal, das Bandpaßfilterausgangssignal FIOOMn, proportional zu Spektralkomponenten der Laufzeitänderungen t1-t2, t2-t3, t3-t1 beim Vielfachen n*OM der weiteren Modulationsfrequenz OM ist. Bei Verwendung eines Frequenzsteuersignals SVCO1, SVCO2, SVCO, welches wenigstens näherungsweise der zeitliche Ableitung des Abtastzeitpunkts t entspricht, ist dazu die einer Integration entsprechende Umkehroperation durchzuführen, was bedeutet, daß der Betrag der Übertragungsfunktion des Bandpaßfilters LEDOMn den Wert 1/n erhält.

Damit erhalten die Bandpaßfilterausgangssignale FIOOMn der Bandpaßfilter LEDOMn Amplituden, die idealerweise jeweils proportional zu Jn mit ganzzahligem n, der Besselfunktion erster Gattung, n-ter Ordnung sind, außerdem jeweils proportional zur cos(EP) bzw. sin(EP) für gerade bzw. ungerade Vielfache n*OM sind und schließlich auch proportional zum gesuchten Meßsignal f1($\Omega$), f2($\Omega$), f($\Omega$) sind. Die Bandpaßfilterausgangssignale FIOOMn werden je einem Leistungsdetektor DETOMn zugeleitet, dessen Ausgangssignale in Gewichtungseinrichtungen Gn mit je einem Leistungsübertragungsfaktor LOMn gewichtet, d.h. multipliziert werden. Die Ausgangssignale der Gewichtungseinrichtungen Gn sind Summationssignale SOMn. Diese werden in einem weiteren Addierer ADD addiert, so daß das Quadrat SQf des gesuchte Meßsignals f1($\Omega$), f2($\Omega$), f($\Omega$) entsteht. Dieses Quadrat SQf wird bei Bedarf, d.h., falls als gesuchtes Meßsignal f1($\Omega$), f2($\Omega$), f($\Omega$) nicht dieses Quadrat mit einer quadratischen Abhängigkeit zumindest einer Komponente des PMD-Vektors $\Omega$ verwendet werden kann, in einem Radizierer RAD radiziert, wobei das gesuchte Meßsignal f1($\Omega$), f2($\Omega$), f($\Omega$) mit einer linearen Abhängigkeit zumindest einer Komponente des PMD-Vektors $\Omega$ entsteht. Das gesuchte Meßsignal f1($\Omega$), f2($\Omega$), f($\Omega$) ist Ausgangssignal einer der weiteren oder der gemeinsamen Signalverarbeitungseinrichtungen PU1, PU2, PU.

In einem ersten Ausführungsbeispiel wird n=1,2 gewählt sowie LOM1*J1(ETA)^2 = LOM2*J2(ETA)^2 eingestellt, was z.B. durch |J1(ETA)| = |J2(ETA)| mittels eines Hubs ETA = 2,63 sowie LOM1=LOM2 wenigstens näherungsweise erreicht wird.

Es ist möglich, daß der Hub ETA im Laufe der Zeit Schwankungen unterworfen ist, z.B. durch Laseralterung. Um die Detektion dennoch in erster Näherung unabhängig vom Phasenwinkel EP halten zu können, sollte das gesuchte Meßsignal f1($\Omega$), f2($\Omega$), f($\Omega$) in erster Näherung nicht vom Modulationshub ETA abhängen. Dies erzielt man beispielsweise durch n=1,2,3 und wenigstens näherungsweise die Auslegung LOM1=0,72852*LOM2, LOM3=1,6036*LOM2 und ETA=3.0542. Stattdessen kann man auch n=2,3,4, LOM2=0,64066*LOM3, LOM4=1,3205*LOM3 und wenigstens näherungsweise ETA=4,2011 wählen. Diese Werte gelten i.a. nur bei exakt sinusförmiger differentieller Phasenmodulation DPM, die in der Praxis nur mit Einschränkungen realisierbar ist. Bei verzerrter differentieller Phasenmodulation DPM oder falls neben der optischen Frequenzmodulation FM auch eine Amplitudenmodulation auftritt, können sich die erforderlichen Leistungsübertragungsfaktoren LOMn von den oben genannten Werten unterscheiden. Falls die differentielle Phasenmodulation DPM dagegen z.B. durch Verwendung eines Frequenzverschiebers linear ausgeprägt ist, kann n=1 mit innerhalb weiter Grenzen beliebigem LOM1 gewählt werden.

Weitere Variationen des erfinderischen Prinzips sind dadurch möglich, daß andere zeitliche Verläufe der differentiellen Phasenmodulation DPM zwischen den beiden optischen Signalen OS1, OS2 vorgesehen werden, beispielsweise durch Applikation nicht nur der weiteren Modulationsfrequenz OM, sondern auch mindestens eines Vielfachen n*OM mit n=2,3,... davon. Vorzugsweise werden solche zeitliche Verläufe so ausgestaltet, daß die Auswertung der Laufzeitänderungen t1-t2, t2-t3, t3-t1 möglichst unabhängig von der Amplitude der differentiellen Phasenmodulation DPM oder des Frequenzmodulationssignals FMS ist.

In der Praxis vorteilhaft ist eine adaptive Gestaltung der Leistungsübertragungsfaktoren LOMn durch variable Gewichtungseinrichtungen Gn.

Die Funktion der Signalverarbeitungseinrichtung PU0, PU1, PU2, PU gemäß Figur 10 läßt sich vorzugsweise durch digitale Signalverarbeitung realisieren. Die Bandpaßfilter LEDOMn werden durch Berechnung der Fourierkoeffizienten n-ter Ordnung des jeweiligen Eingangssignals mit der Modulationsfrequenz OMO, OM als Bezugsperiode realisiert, wobei, falls die Integration als Umkehroperation erforderlich ist, diese Fourierkoeffizienten mit 1/n multipliziert werden. Sie ergeben die Bandpaßfilterausgangssignale FIOOMn. Die Leistungsmesser DETOMn werden durch Bildung der Betragsquadrate dieser als Fourierkoeffizienten ausgebildeten Bandpaßfilterausgangssignale FIOOMn realisiert.

Die weiteren bei einmaligem Durchlauf der Signalverarbeitungseinrichtung PU0, PU1, PU2, PU gemäß Figur 10 erforderlichen Berechnungsschritte sind im folgenden in einem Ausschnitt eines Programms, welches in der Programmiersprache Matlab geschrieben ist, dargelegt.

```
% form spectral power vector

                    SP=[SP1; SP2; SP3];

% calculated measurement signal

                    SQf=transpose(LOM)*SP;

% update relative weights

                    SPrelest=SPrelest+SPrelestgain*SP;
```

EP 1 371 154 B1

SPrelest=SPrelest*(2-sum(SPrelest));

% modify weights
% Here the DC component of the spectral powers is removed,
% assuming SPrelest is an accurate estimate of the % relative power distribution.
% Obtain a signal which is fairly independent of total power % fluctuations

SPw=SP-SPrelest*sum(SP);

% remove mean value

SPw=SPw-mean(SPw);

% correlate powers in order to obtain error signal

rawerrors=SPw*SQf;

% integration

LOM=LOM-(weightgain.*rawerrors);

% keep weight sum constant

LOM=LOM*(2-sum(LOM));

Das Quadrat SQf des gewünschten Meßsignals f1(Ω), f2(Ω), f(Ω) wird durch Skalarmultiplikation eines Spektralleistungsvektors SP, der aus den Spektralleistungen SP1, SP2, SP3 besteht, mit einem Leistungsübertragungsvektor LOM der Leistungsübertragungsfaktoren LOM1, LOM2, LOM3 ermittelt. Der Leistungsübertragungsvektor LOM wird im folgenden adaptiv verändert.
Dazu wird u.a. eine das Langzeitverhalten wiedergebender Schätzvektor SPrelest ermittelt, der die relativen Anteile der Spektralleistungen SP1, SP2, SP3 als Komponenten enthält. Aufgrund der erfolgten Messung des Spektralleistungsvektors SP wird der Schätzvektor SPrelest mit einer Integrationsverstärkung SPrelestgain aufintegriert und darauf mit Hilfe einer Näherungsformel auf den Summenwert 1 normiert. Anschließend werden die Erwartungswerte der Gleichanteile des Spektralleistungsvektors SP, die sich durch das Produkt SPrelest*sum(SP) des Schätzvektors SPrelest mit der Summe sum(SP) der Spektralleistungen SP1, SP2, SP3 ergibt, vom Spektralleistungsvektor SP abgezogen, so daß sich ein im Mittel gleichanteilsfreier Spektralleistungswechselanteilvektor SPw ergibt. Dieser wird, ggf. nach Entfernung seines Gleichanteils mean(SPw), mit dem Quadrat SQf korreliert, wobei ein Fehlervektor rawerrors entsteht. Der Fehlervektor rawerrors wird mit einer Gewichtverstärkung weightgain multipliziert und dann vom Gewichtsvektor G abgezogen. Schließlich wird der Leistungsübertragungsvektor LOM mit Hilfe einer Näherungsformel auf den Summenwert 1 normiert.
Vor erstmaliger Durchführung dieses Programmabschnitts sind einige Variablen vorzubelegen, was durch folgende Matlab-Zeilen erfolgen kann:

SPrelest=[0; 0; 0];

SPrelestgain=1e-4;

LOM=[1; 1; 1]/3;

weightgain=1e-6;

In der Praxis führen geringere Integrationsverstärkung SPrelestgain und Gewichtverstärkung weightgain zu besseren Adaptionsresultaten auf Kosten der Adaptionsgeschwindigkeit. Das Programm adaptiert den Gewichtsvektor in einem weiten Bereich vorhandener Hübe ETA, z.B. für ETA=2,9. Dabei kann die optische Frequenzmodulation FM auch gegenüber der Sinusform verzerrt sein.

Weitere, ebenfalls einsetzbare Ausgestaltungen der Signalverarbeitungseinrichtung PU0, PU1, PU2, PU sind in der deutschen Patentanmeldung P 10019932.1 beschrieben.

Die Signalverarbeitungseinrichtung PU0, PU1, PU2, PU kann statt der in obigen Ausführungsbeispielen verwendeten asynchronen Auswertung von Laufzeitänderungen t1-t2, t2-t3, t3-t1 diese auch synchron detektieren. Dazu ist empfängerseitige Kenntnis der Modulationsfrequenz OM0, OM erforderlich, was durch eine Rückgewinnungseinrichtung erfolgen kann oder z.B. durch eine zeitliche Referenz, die mit dem optischen Signal OS0, OS1, OS2 mitgeschickt wird, beispielsweise als Rahmentaktsignal eines Bitfehlerkorrekturalgorithmus.

In der gemeinsamen Steuereinheit CU gemäß Figur 9 wird als ein zusätzliches Phasenvergleichssignal PC1-PC2 die Differenz der weiteren Phasenvergleichssignale PC1, PC2 in einem zweiten Subtrahierer SUBPC gebildet und einem vorzugsweise als Integrator ausgebildeten zusätzlichen Regler INT zugeleitet. An seinem Ausgang entsteht ein zusätzliches Meßsignal $f3(\Omega)$, welches wiederum eine vorzugsweise als linear ausgebildete Funktion zumindest des PMD-Vektors $\Omega$ ist. Das zusätzliche Meßsignal $f3(\Omega)$ wird dem Taktphasensteuersignaleingang DPHCLC zugeführt, so daß im Taktphasenschieber DPHCL die Phasendifferenz der zwei weiteren Taktsignale CL1, CL2 so eingestellt wird, daß das zusätzliche Phasenvergleichssignal PC1-PC2 wenigstens näherungsweise verschwindet. Das zusätzliche Meßsignal $f3(\Omega)$ ist wenigstens näherungsweise proportional zur parallel zu den Polarisationen der weiteren optischen Signale OS1, OS2 liegenden ersten Komponente $\Omega1$ des PMD-Vektors $\Omega$. Das zusätzliche Meßsignal $f3(\Omega)$ kann, beispielsweise zur Minimierung der ersten Komponente $\Omega1$ des PMD-Vektors $\Omega$, dem gemeinsamen PMD-Regler RW zugeleitet werden.

Alternativ zur Gewinnung des zusätzlichen Meßsignals $f3(\Omega)$ in der gemeinsamen Steuereinheit CU kann dieses auch in einer für beide weiteren Empfänger RX1, RX2 nur einfach benötigten und in Figur 5 ebenfalls dargestellten zusätzlichen Steuereinheit CU3 gewonnen werden. Darin werden die beiden weiteren Taktsignale CL1, CL2, von denen eines in einem Phasenschieber PHS um 90° oder -90° phasenverschoben wird, zwei Eingängen eines Taktsignalmultiplizierers MULCL zugeleitet. Dessen Ausgangssignal wird einem zusätzlichen Tiefpaßfilter LPF3 zugeleitet, der an seinem Ausgang das zusätzliche Meßsignal $f3(\Omega)$ abgibt, welches den zwei weiteren PMD-Reglern RW1, RW2 zugeführt werden kann.

Die Erfindung läßt sich auch mit anderen, z.B. aus R. Noe et al., J. Lightwave Techn. Seiten 1602-1616 bekannten Verfahren und Anordnungen zur PMD-Detektion kombinieren.

Die Polarisationstransformatoren PT1, PT2, PT können beispielsweise unter Auswertung von Interferenzsignalen, Korrelationssignalen oder Schaltersignalen entsprechend den deutschen Patentanmeldungen P 10019932.1, der Literaturstelle S. Hinz et al., "Optical NRZ 2×10Gbit/s Polarization Division Multiplex Transmission with Endless Polarization Control Driven by Correlation Signals", Electronics Letters 36(2000)16, S. 1402-1403 oder der deutschen Patentanmeldung 10035086.0 eingeregelt werden. Insbesondere können Spektralanteile, die in den weiteren detektierten Signalen ED1, ED2 bei Vielfachen n*OM mit n=1,2,3,... der weiteren Modulationsfrequenz OM auftreten, detektiert und durch geeignete Einstellung der Polarisationstransformatoren PT1, PT2, PT minimiert werden.

Die weiteren optischen Signale OS1, OS2 werden im gemeinsamen optischen Sender TX vorzugsweise überlappend oder sogar ohne Zeitversatz, z.B. mit gleichzeitig zur Wirkung kommenden weiteren sendeseitigen Modulationssignalen SDD1, SDD2 moduliert.

In einem weiteren Ausführungsbeispiel der Erfindung sind außerdem Einrichtungen vorhanden, die weitere Verzerrungen detektiert, beispielsweise eine schädliche Art von Polarisationsmodendispersion höherer Ordnung, welche trotz oder Kompensation von Polarisationsmodendispersion erster Ordnung auftreten kann.

Dazu wird gemäß Figur 5 eine vorzugsweise als Leistungsdetektor ausgebildete Meßeinrichtung POW0, POW1, POW2 eingesetzt, der das detektierte Signal ED0, ED1, ED2 - ggf. nach Durchlaufen eines vorzugsweise als Hochpaß- oder Bandpaßfilter ausgebildeten spektralen Formungsfilters F0, F1, F2 - zugeführt wird. Die Meßeinrichtung POW0, POW1, POW2 gibt ein vorzugsweise die Leistung wenigstens eines spektralen Anteils des detektierten Signals ED0, ED1, ED2 darstellendes Meßeinrichtungsausgangssignal SPOWO, SPOW1, SPOW2 ab, welches einer weiteren, vorzugsweise wie die vorbeschriebenen Signalverarbeitungseinrichtungen PU0, PU1, PU2, PU ausgebildeten zusätzlichen Signalverarbeitungseinrichtung PPU0, PPU1, PPU2 zugeführt wird, welche ein Meßausgangssignal $fP0(\Omega)$, $fP1(\Omega)$, $fP2(\Omega)$ abgibt, welches dem ersten PMD-Regler RW0, bzw. dem ersten weiteren oder zweiten weiteren PMD-Regler RW1, RW2 zugeführt werden kann. Minimale Verzerrung wird vorzugsweise dann angezeigt, wenn das Meßausgangssignal $fP0(\Omega)$, $fP1(\Omega)$, $fP2(\Omega)$ minimale Schwankungen aufweist. Der erste, erste weitere oder zweite weitere PMD-Regler RW0, RW1, RW2 regelt den ihm zugeordneten ersten, ersten weiteren oder zweiten weiteren Kompensator von Polarisationsmodendispersion PMDC0, PMDC1, PMDC2 so ein, daß dieser Zustand hergestellt wird.

In einem weiteren Ausführungsbeispiel der Erfindung werden die Modulatoren MO1, M02 als Phasenmodulatoren für Phasenumtastung ausgebildet, vorzugsweise für binäre oder quaternäre Phasenumtastung QPSK, oder die erste Lasereinheit LU0 erzeugt ein solches Signal. Ein sendeseitiger Weglängenunterschied |DT1-DT2| ist dabei in der Regel nicht notwendig. Empfängerseitig werden die Laufzeitänderungen t1-t2, t2-t3, t3-t1 beispielsweise durch Korrelationstechniken ermittelt. Vorzugsweise wird ein wiedergewonnenes Digitalsignal DD0, DD1, DD2 mit einem detektierten Signal ED0, ED1, ED2 korreliert.

Statt der Verwendung von als Polarisatoren ausgebildeten weiteren polarisationssensitiven Elementen POL1, POL2 mit nachfolgenden, als Direktempfänger ausgebildeten weiteren Empfängern RX1, RX2 können die weiteren polarisationssensitiven Elemente POL1, POL2 mit ihrem jeweils nachfolgenden weiteren Empfänger RX1, RX2 auch als Überlagerungsempfänger, beispielsweise als Heterodyn-, Homodyn- oder Phasendiversitätsempfänger ausgebildet werden.

Vorstehend wurde die erfindungsgemäße Auswertung von Laufzeitänderungen t1-t2, t2-t3, t3-t1 mittels bei der Rückgewinnung des Taktsignals CL0, CL1, CL2, CL auftretender Signale SVCO0, SVCO1, SVCO2, SVCO, PC0, PC1, PC2, PC1+PC2, PC1-PC2, CL0, CL1, CL2 beschrieben. Alternativ zu der vorteilhaften Auswertung von Änderungen des Integrals des Frequenzsteuersignals SVCO0, SVCO1, SVCO2, SVCO kann ein Meßsignal $f0(\Omega)$, $f1(\Omega)$, $f2(\Omega)$, $f0(\Omega)$, $f3(\Omega)$ auch dadurch gewonnen werden, daß man die relative Verzögerung eines Taktsignals CL0, CL1, CL2, CL gegenüber einem als zeitliches Referenzsignal dienendem zusätzlichen Taktsignal CLX ermittelt. Das zusätzliche Taktsignal CLX kann z.B. einem optischen Empfänger, der ein Signal bei einer anderen optischen Wellenlänge empfängt, entnommen werden, oder aus mehreren solchen Signalen durch Phasenmittelung hergestellt werden.

Bezugszeichenliste

| | |
|---|---|
| LU0 | Lasereinheit |
| LA | Sendelaser |
| FM | optische Frequenzmodulation |
| FMS | Frequenzmodulationssignal |
| PMC | sendeseitiger Leistungsteiler |
| MO1, MO2 | Modulatoren |
| SDD0, SDD1, SDD2 | sendeseitige Modulationssignale |
| DD0, DD1, DD2 | Datenausgangssignale |
| OS0, OS1, OS2 | optische Signale |
| PDM1, PDM2, PDM12, PDM21, PDM0 | phasendifferenzmodulierende Mittel |
| PHMO1, PHMO2 | Winkelmodulator |
| PBSS | Sendeseitiger Polarisationsstrahlteiler |
| PHMO12 | Differentieller Winkelmodulator |
| DPM | Differentielle Phasenmodulation |
| FD | Frequenzdifferenz |
| DT1, DT2 | Laufzeiten |
| \|DT1-DT2\| | Laufzeitdifferenzbetrag |
| TX0, TX | optische Sender |
| LWL | Lichtwellenleiter |
| RX0, RX1, RX2 | Empfänger |
| INRX0, INRX1, INRX2 | Empfängereingang |
| PMDC0, PMDC1, PMDC2, PMDC | Kompensatoren von Polarisationsmodendispersion |
| PT1, PT2, PT | Polarisationstransformatoren |
| SCR | Polarisationsverwürfler |
| SSCR | Polarisationsverwürflersignal |
| LS0 | erstes Lasersignal |
| OM0, OM | Modulationsfrequenz |
| SPMDC0, SPMDC1, SPMDC2, SPMDC | PMD-Steuersignal |
| WDMUX | Multiplexer |
| WDDEMUX | Demultiplexer |
| DEMUX | Polarisationsdemultiplexer |
| DEMUXIN | Polarisationsdemultiplexereingang |
| DEMUXOUT1, DEMUXOUT2 | Polarisationsdemultiplexerausgang |

| | |
|---|---|
| ETA | Hub |
| EPS | Differenzphasenwinkel |
| EP | Phasenwinkel |
| TE | empfängerseitiger Leistungsteiler |
| POL1, POL2, POL | polarisationssensitive Elemente |
| CU0, CU1, CU2, CU, CU3 | Steuereinheit |
| PD01, PD11, PD21 | Photodetektoren |
| ED0, ED1, ED2 | detektierte Signale |
| D0, D1, D2 | Digitalempfänger |
| PC0, PC1, PC2, PC1+PC2, PC1-PC2 | Phasenvergleichssignal |
| CL0, CL1, CL2, CL, CLX | Taktsignal |
| PCC0, PCC1, PCC2 | Phasenvergleicher |
| CLE0, CLE1, CLE2 | Taktlinienextrahierer |
| MU0, MU1, MU2 | Multiplizierer |
| LPF0, LPF1, LPF2, LPF3 | Tiefpaßfilter |
| PI0, PI1, PI2, PI | Taktsignalregler |
| RW0, RW1, RW2, RW | PMD-Regler |
| PU0, PU1, PU2, PU | Signalverarbeitungseinrichtung |
| $f0(\Omega)$, $f1(\Omega)$, $f2(\Omega)$, $f(\Omega)$, $f3(\Omega)$ | Meßsignal |
| MULCL | Taktsignalmultiplizierer |
| PHS | Phasenschieber |
| P1, P2, P3 | Abtastpunkt |
| t1, t2, t3 | Abtastzeitpunkt |
| t | Abtastzeit |
| t1-t2, t2-t3, t3-t1 | Laufzeitänderung |
| SVCO0, SVCO1, SVCO2, SVCO | Frequenzsteuersignal |
| VCO0, VCO1, VCO2, VCO | spannungsgesteuerter Oszillator |
| DPHCL | differentiellen Taktphasenschieber |
| DPHCLC | Taktphasensteuersignaleingang |
| ADDPC, ADD | Addierer |
| SUBPC, SUB | Subtrahierer |
| DCBL | Gleichsignalblockierer |
| FIL | Filter |
| MAX | Maximumhalteeinrichtung |
| MIN | Minimumhalteeinrichtung |
| $\Omega$ | PMD-Vektor |
| RMS | Effektivwertmesser |
| LEDOMn (n = 0, 1, 2, ...) | Bandpaßfilter |
| n*OM | Vielfache einer Modulationsfrequenz |
| FIOOMn | Bandpaßfilterausgangssignal |
| DETOMn | Leistungsmesser |
| Gn | Gewichtungseinrichtung |
| SOMn | Summationssignale |
| LOMn | Leistungsübertragungsfaktor |
| SQf | Quadrat |
| SPrelest | Schätzvektor |
| SP1, SP2, SP3 | Spektralleistungen |
| SP | Spektralleistungsvektor |
| LOM | Leistungsübertragungsvektor |
| SPrelestgain | Integrationsverstärkung |
| SPw | Spektralleistungswechselanteilvektor |
| rawerrors | Fehlervektor |
| weightgain | Gewichtverstärkung |
| F0, F1, F2 | spektrales Formungsfilter |
| POW0, POW1, POW2 | Meßeinrichtung |
| SPOW0, SPOW1, SPOW2 | Meßeinrichtungsausgangssignal |
| PPU0, PPU1, PPU2 | Signalverarbeitungseinrichtung |
| $fP0(\Omega)$, $fP1(\Omega)$, $fP2(\Omega)$ | Meßausgangssignal |

**Patentansprüche**

1. Anordnung für eine optische Informationsübertragung mit einem optischen Sender (TX0, TX), der mindestens ein moduliertes optisches Signal (OS0, OS1, OS2) aussendet, und einem Empfänger (RX0, RX1, RX),
   **dadurch gekennzeichnet,**
   **daß** der optische Empfänger (RX0, RX1, RX2) eine Steuereinheit (CU0, CU1, CU2, CU, CU3) zur Messung der Laufzeitänderungen (t1-t2, t2-t3, t3-t1) mindestens eines der optischen Signale (OS0, OS1, OS2) aufweist,
   **daß** der optische Sender (TX0, TX) zur Aussendung verschiedener Polarisationszustände der Gesamtheit (OS0, OS1, OS2, OS1 und OS2) mindestens eines anwesenden optischen Signals (OS0, OS1, OS2) ausgebildet ist.

2. Anordnung nach Anspruch 1,
   **dadurch gekennzeichnet,**
   **daß** der optische Empfänger (RX0, RX1, RX2) eine Steuereinheit (CU0, CU1, CU2, CU, CU3) zur Messung von über auftretende Werte eines sendeseitigen Modulationssignals (SDD0, SDD1, SDD2) gemittelten Laufzeitänderungen (t1-t2, t2-t3, t3-t1) mindestens eines der optischen Signale (OS0, OS1, OS2) aufweist.

3. Anordnung nach einem der Ansprüche 1 bis 2,
   **dadurch gekennzeichnet,**
   **daß** die Steuereinheit (CU0, CU1, CU2, CU, CU3) eine Signalverarbeitungseinheit (PU0, PU1, PU2, PU) aufweist, in welcher mindestens ein bei der Rückgewinnung eines Taktsignals (CL0, CL1, CL2, CL) auftretendes Signal (SVCO0, SVCO1, SVCO2, SVCO, PC0, PC1, PC2, PC1+PC2, PC1-PC2, CL0, CL1, CL2) verarbeitet wird und die ein Meßsignal (f0($\Omega$), f1($\Omega$), f2($\Omega$), f3($\Omega$)) zur Messung der Laufzeitänderungen (t1-t2, t2-t3, t3-t1) abgibt.

4. Anordnung nach Anspruch 3,
   **dadurch gekennzeichnet,**
   **daß** die Steuereinheit (CU0, CU1, CU2, CU, CU3) einen spannungsgesteuerten Oszillator (VGO0, VCO1, VCO2, VCO) aufweist, der die Frequenz eines Taktsignals (CL0, CL1, CL2) als Funktion eines Frequenzsteuersignals (SVCO0, SVCO1, SVCO2, SVCO) bestimmt.

5. Anordnung nach Anspruch 4,
   **dadurch gekennzeichnet,**
   **daß** die Signalverarbeitungseinheit (PU0, PU1, PU2, PU) Änderungen des Integrals des Frequenzsteuersignals (SVCO0, SVCO1, SVCO2, SVCO) als Meßsignal (f0($\Omega$), f1($\Omega$), f2($\Omega$)) bestimmt.

6. Anordnung nach einem der Ansprüche 1 bis 5,
   **dadurch gekennzeichnet,**
   **daß** in einem ersten optischen Sender (TX0) ein Polarisationsverwürfler (SCR) vorgesehen ist, der die Polarisation eines ersten optischen Signals (OS0) verwürfelt.

7. Anordnung nach einem der Ansprüche 1 bis 5,
   **dadurch gekennzeichnet,**
   **daß** in einem gemeinsamen optischen Sender (TX) ein phasendifferenzmodulierendes Mittel (PDM1, PDM2, PDM12, PDM21, PDM0) vorgesehen ist, welches eine differentielle Phasenmodulation (DPM) zwischen mindestens zwei verschieden polarisierten weiteren optischen Signalen (OS1, OS2) erzeugt.

8. Anordnung nach Anspruch 7,
   **dadurch gekennzeichnet,**
   **daß** die weiteren optischen Signale (OS1, OS2) während einer Bitdauer eine nicht konstante komplexe Hüllkurve besitzen.

9. Anordnung nach einem der vorstehenden Ansprüche,
   **dadurch gekennzeichnet,**
   **daß** ein Kompensator von Polarisationsmodendispersion (PMDC0, PMDC1, PMDC2, PMDC) vorgesehen ist, der durch ein aus dem Meßsignal (f0($\Omega$), f1($\Omega$), f2($\Omega$), f3($\Omega$)) gewonnenes PMD-Steuersignal (SPMDC0, SPMDC1, SPMDC2, SPMDC) angesteuert wird.

10. Verfahren für eine optische Informationsübertragung mit einem optischen Sender (TX0, TX), der mindestens ein moduliertes optisches Signal (OS0, OS1, OS2) aussendet, und einem Empfänger (RX0, RX1, RX),

**dadurch gekennzeichnet,**

**daß** im optischen Empfänger (RX0, RX1, RX2) Laufzeitänderungen (t1-t2, t2-t3, t3-t1) mindestens eines der optischen Signale (OS0, OS1, OS2) gemessen werden,

**daß** die Gesamtheit (OS0, OS1, OS2, OS1 und OS2) mindestens eines anwesenden optischen Signals (OS0, OS1, OS2) verschiedene Polarisationszustände aufweisen kann.

**11.** Verfahren nach Anspruch 10,
**dadurch gekennzeichnet,**
**daß** die Laufzeitänderungen (t1-t2, t2-t3, t3-t1) über auftretende Werte eines sendeseitigen Modulationssignals (SDD0, SDD1, SDD2) gemittelt gemessen werden.

**12.** Verfahren nach einem der Ansprüche 10 bis 11,
**dadurch gekennzeichnet,**
**daß** mindestens ein bei der Rückgewinnung eines Taktsignals (CL0, CL1, CL2, CL) auftretendes Signal (SVCO0, SVCO1, SVCO2, SVCO, PC0, PC1, PC2, PC1+PC2, PC1-PC2, CL0, CL1, CL2) zur Bildung eines die Laufzeitänderungen (t1-t2, t2-t3, t3-t1) repräsentierenden Meßsignals (f0($\Omega$), f1($\Omega$), f2($\Omega$), f3($\Omega$)) verarbeitet wird.

**13.** Verfahren nach Anspruch 12,
**dadurch gekennzeichnet,**
**daß** das bei der Rückgewinnung eines Taktsignals (CL0, CL1, CL2, CL) auftretende Signal (SVCO0, SVCO1, SVCO2, SVCO) das Frequenzsteuersignal (SVCO0, SVCO1, SVCO2, SVCO) eines spannungsgesteuerten Oszillator (VCO0, VCO1, VCO2, VCO) ist, der die Frequenz eines Taktsignals (CL0, CL1, CL2) als Funktion des Frequenzsteuersignals (SVCO0, SVCO1, SVCO2, SVCO) bestimmt.

**14.** Verfahren nach Anspruch 13,
**dadurch gekennzeichnet,**
**daß** Änderungen des Integrals des Frequenzsteuersignals (SVCO0, SVCO1, SVCO2, SVCO) als Meßsignal (f0($\Omega$), f1($\Omega$), f2($\Omega$)) bestimmt werden.

**15.** Verfahren nach einem der Ansprüche 10 bis 14,
**dadurch gekennzeichnet,**
**daß** die Polarisation eines ersten optischen Signals (OS0) verwürfelt wird.

**16.** Verfahren nach einem der Ansprüche 10 bis 14,
**dadurch gekennzeichnet,**
**daß** in einem gemeinsamen optischen Sender (TX) eine differentielle Phasenmodulation (DPM) zwischen mindestens zwei verschieden polarisierten weiteren optischen Signalen (OS1, OS2) erzeugt wird.

**17.** Verfahren nach Anspruch 16,
**dadurch gekennzeichnet,**
**daß** die weiteren optischen Signale (OS1, OS2) während einer Bitdauer eine nicht konstante komplexe Hüllkurve besitzen.

**18.** Verfahren nach einem der vorstehenden Ansprüche,
**dadurch gekennzeichnet,**
**daß** ein aus dem Meßsignal (f0($\Omega$), f1($\Omega$), f2($\Omega$), f3($\Omega$)) gewonnenes PMD-Steuersignal (SPMDC0, SPMDC1, SPMDC2, SPMDC) einen Kompensator von Polarisationsmodendispersion (PMDC0, PMDC1, PMDC2, PMDC) ansteuert.

**Claims**

**1.** System for an optical information transmission with an optical transmitter (TX0, TX), which emits at least one modulated optical signal (OS0, OS1, OS2), and a receiver (RX0, RX1, RX),
**characterized**
**in that** the optical receiver (RX0, RX1, RX2) comprises a control unit (CU0, CU1, CU2, CU, CU3) for measurement of propagation delay changes (t1-t2, t2-t3, t3-t1) of at least one of the optical signals (OS0, OS1, OS2),
**in that** the optical transmitter (TX0, TX) is formed for the emission of various states-of-polarization of the entirety (OS0, OS1, OS2, OS1 and OS2) of at least one present optical signal (OS0, OS1, OS2).

2. System according to Claim 1,
   **characterized**
   **in that** the optical receiver (RX0, RX1, RX2) comprises a control unit (CU0, CU1, CU2, CU, CU3) for measurement of propagation delay changes (t1-t2, t2-t3, t3-t1), averaged over occurring values of a transmitter-sided modulation signal (SDD0, SDD1, SDD2), of at least one of the optical signals (OS0, OS1, OS2).

3. System according to one of Claims 1 to 2,
   **characterized**
   **in that** the control unit (CU0, CU1, CU2, CU, CU3) comprises a signal processing unit (PU0, PU1, PU2, PU), in which at least one signal (SVCO0, SVCO1, SVCO2, SVCO, PC0, PC1, PC2, PC1+PC2, PC1-PC2, CL0, CL1, CL2) occurring in the recovering of a clock signal (CL0, CL1, CL2, CL) is processed, and which delivers a measurement signal (f0($\Omega$), f1($\Omega$), f2($\Omega$), f3($\Omega$)) for the measurement of the propagation delay changes (t1-t2, t2-t3, t3-t1).

4. System according to Claim 3,
   **characterized**
   **in that** the control unit (CU0, CU1, CU2, CU, CU3) comprises a voltage-controlled oscillator (VCO0, VCO1, VCO2, VCO), which determines the frequency of a clock signal (CL0, CL1, CL2) as a function of a frequency control signal (SVCO0, SVCO1, SVCO2, SVCO).

5. System according to Claim 4,
   **characterized**
   **in that** the signal processing unit (PU0, PU1, PU2, PU) determines changes of the integral of the frequency control signal (SVCO0, SVCO1, SVCO2, SVCO) as a measurement signal (f0($\Omega$), f1($\Omega$), f2($\Omega$)).

6. System according to one of Claims 1 to 5,
   **characterized**
   **in that** a polarization scrambler (SCR), which scrambles the polarization of a first optical signal (OS0), is provided in a first optical transmitter (TX0).

7. System according to one of Claims 1 to 5,
   **characterized**
   **in that** a phase difference modulating means (PDM1, PDM2, PDM12, PDM21, PDM0), which generates a differential phase modulation (DPM) between at least two differently polarized other optical signals (OS1, OS2), is provided in a common optical transmitter (TX).

8. System according to Claim 7,
   **characterized**
   **in that** the other optical signals (OS1, OS2) exhibit a complex envelope that is not constant during a bit duration.

9. System according to one of the preceding Claims,
   **characterized**
   **in that** a compensator of polarization mode dispersion (PMDC0, PMDC1, PMDC2, PMDC) is provided, which is controlled by a PMD control signal (SPMDC0, SPMDC1, SPMDC2, SPMDC) that is obtained from the measurement signal (f0($\Omega$), f1($\Omega$), f2($\Omega$), f3($\Omega$)).

10. Method for an optical information transmission with an optical transmitter (TX0, TX), which emits at least one modulated optical signal (OS0, OS1, OS2), and a receiver (RX0, RX1, RX),
    **characterized**
    **in that** propagation delay changes (t1-t2, t2-t3, t3-t1) of at least one of the optical signals (OS0, OS1, OS2) are measured in the optical receiver (RX0, RX1, RX2),
    **in that** the entirety (OS0, OS1, OS2, OS1 and OS2) of at least one present optical signal (OS0, OS1, OS2) can exhibit various states-of-polarization.

11. Method according to Claim 10,
    **characterized**
    **in that** the propagation delay changes (t1-t2, t2-t3, t3-t1) are measured averaged over occurring values of a transmitter-sided modulation signal (SDD0, SDD1, SDD2).

**12.** Method according to one of Claims 10 to 11,
**characterized**
**in that** at least one signal (SVCO0, SVCO1, SVCO2, SVCO, PC0, PC1, PC2, PC1+PC2, PC1-PC2, CL0, CL1, CL2) occurring in the recovering of a clock signal (CL0, CL1, CL2, CL) is processed for the creation of a measurement signal (f0($\Omega$), f1($\Omega$), f2($\Omega$), f3($\Omega$)) which represents the propagation delay changes (t1-t2, t2-t3, t3-t1).

**13.** Method according to Claim 12,
**characterized**
**in that** the signal (SVCO0, SVCO1, SVCO2, SVCO) occurring in the recovering of a clock signal (CL0, CL1, CL2, CL) is the frequency control signal (SVCO0, SVCO1, SVCO2, SVCO) of a voltage-controlled oscillator (VCO0, VCO1, VCO2, VCO), which determines the frequency of a clock signal (CL0, CL1, CL2) as a function of the frequency control signal (SVCO0, SVCO1, SVCO2, SVCO).

**14.** Method according to Claim 13,
**characterized**
**in that** changes of the integral of the frequency control signal (SVCO0, SVCO1, SVCO2, SVCO) are determined as a measurement signal (f0($\Omega$), f1($\Omega$), f2($\Omega$)).

**15.** Method according to one of Claims 10 to 14,
**characterized**
**in that** the polarization of a first optical signal (OS0) is being scrambled.

**16.** Method according to one of Claims 10 to 14,
**characterized**
**in that** a differential phase modulation (DPM) between at least two differently polarized other optical signals (OS1, OS2) is generated in a common optical transmitter (TX).

**17.** Method according to Claim 16,
**characterized**
**in that** the other optical signals (OS1, OS2) exhibit a complex envelope that is not constant during a bit duration.

**18.** Method according to one of the preceding Claims,
**characterized**
**in that** a PMD control signal (SPMDC0, SPMDC1, SPMDC2, SPMDC) that is obtained from the measurement signal (f0($\Omega$), f1($\Omega$), f2($\Omega$), f3($\Omega$)) controls a compensator of polarization mode dispersion (PMDC0, PMDC1, PMDC2, PMDC).

**Revendications**

**1.** Dispositif de transmission optique d'informations avec un émetteur optique (TX0, TX), ce qui émet au moins un signal optique (OS0, OS1, OS2) modulé, et un récepteur (RX0, RX1, RX),
**caractérisé**
**en ce que** le récepteur optique (RX0, RX1, RX2) présente une unité de commande (CU0, CU1, CU2, CU, CU3) pour le mesurage de changes de délai de propagation (t1-t2, t2-t3, t3-t1) d'au moins un des signaux optiques (OS0, OS1, OS2),
**en ce que** l'émetteur optique (TX0, TX) est formé pour l'émission de differents états de polarisation de l'ensemble (OS0, OS1, OS2, OS1 and OS2) d'au moins un signal optique (OS0, OS1, OS2) présent.

**2.** Dispositif selon revendication 1,
**caractérisé**
**en ce que** le récepteur optique (RX0, RX1, RX2) présente une unité de commande (CU0, CU1, CU2, CU, CU3) pour le mesurage de changes de délai de propagation (t1-t2, t2-t3, t3-t1), moyennés sur valeurs apparaissants d'un signal de modulation de coté d'émetteur (SDD0, SDD1, SDD2), d'au moins un des signaux optiques (OS0, OS1, OS2).

**3.** Dispositif selon une des revendications 1 à 2,
**caractérisé**
**en ce que** l'unité de commande (CU0, CU1, CU2, CU, CU3) présente une unité de traitement de signaux (PU0, PU1, PU2, PU), dans laquelle au moins un signal (SVCO0, SVCO1, SVCO2, SVCO, PC0, PC1, PC2, PC1+PC2, PC1-PC2, CL0, CL1, CL2) apparaissant lors de la régénération d'un signal d'horloge (CL0, CL1, CL2, CL) est traité, et laquelle délivre un signal de mesure (f0($\Omega$), f1($\Omega$), f2($\Omega$), f3($\Omega$)) pour le mesurage des changes de délai de propagation (t1-t2, t2-t3, t3-t1).

**4.** Dispositif selon revendication 3,
**caractérisé**
**en ce que** l'unité de commande (CU0, CU1, CU2, CU, CU3) présente un oscillateur à commande par tension (VCO0, VCO1, VCO2, VCO), lequel détermine la fréquence d'un signal d'horloge (CL0, CL1, CL2) comme fonction d'un signal pour la commande de fréquence (SVCO0, SVCO1, SVCO2, SVCO).

**5.** Dispositif selon revendication 4,
**caractérisé**
**en ce que** l'unité de traitement de signaux (PU0, PU1, PU2, PU) détermine changes de l'intégral du signal pour la commande de fréquence (SVCO0, SVC01, SVCO2, SVCO) comme signal de mesure (f0($\Omega$), f1($\Omega$), f2($\Omega$)).

**6.** Dispositif selon une des revendications 1 à 5,
**caractérisé**
**en ce qu'**un randomiseur de polarisation (SCR), qui randomise la polarisation d'un premier signal optique (OS0), est prévu dans un premier émetteur optique (TX0).

**7.** Dispositif selon une des revendications 1 à 5,
**caractérisé**
**en ce qu'**un moyen de modulation differentielle de phases (PDM1, PDM2, PDM12, PDM21, PDM0), lequel génère un modulation differentielle de phases (DPM) entre au moins deux autres signaux optiques ayants des polarisations differentes (OS1, OS2), est prévu dans un émetteur optique commun (TX).

**8.** Dispositif selon revendication 7,
**caractérisé**
**en ce que** les autres signaux optiques (OS1, OS2) possèdent une enveloppe laquelle n'est pas constante pendant une duration d'un bit.

**9.** Dispositif selon une des revendications précédentes,
**caractérisé**
**en ce qu'**un compensateur (PMDC0, PMDC1, PMDC2, PMDC) de dispersion modale de polarisation (PMD) est prévu, lequel est commandé par un signal de commande de PMD (SPMDC0, SPMDC1, SPMDC2, SPMDC) gagné du signal de mesure (f0($\Omega$), f1($\Omega$), f2($\Omega$), f3($\Omega$)).

**10.** Procédé de transmission optique d'informations avec un émetteur optique (TX0, TX), ce qui émet au moins un signal optique (OS0, OS1, OS2) modulé, et un récepteur (RX0, RX1, RX),
**caractérisé**
**en ce que** changes de délai de propagation (t1-t2, t2-t3, t3-t1) d'au moins un des signaux optiques (OS0, OS1, OS2) sont mésurés dans le récepteur optique (RX0, RX1, RX2),
**en ce que** l'ensemble (OS0, OS1, OS2, OS1 and OS2) d'au moins un signal optique (OS0, OS1, OS2) présent peut présenter differents états de polarisation.

**11.** Procédé selon revendication 10,
**caractérisé**
**en ce que** les changes de délai de propagation (t1-t2, t2-t3, t3-t1) sont mesurés moyennés sur valeurs apparaissants d'un signal de modulation de coté d'émetteur (SDD0, SDD1, SDD2).

**12.** Procédé selon une des revendications 10 à 11,
**caractérisé**
**en ce qu'**au moins un signal (SVCO0, SVCO1, SVCO2, SVCO, PC0, PC1, PC2, PC1+PC2, PC1-PC2, CL0, CL1, CL2) apparaissant lors de la régénération d'un signal d'horloge (CL0, CL1, CL2, CL) est traité pour la formation d' signal de mesure (f0($\Omega$), f1($\Omega$), f2($\Omega$), f3($\Omega$)), ce qui représente les changes de délai de propagation (t1-t2, t2-t3, t3-t1).

**13.** Procédé selon revendication 12,
**caractérisé**
**en ce que** le signal (SVCO0, SVCO1, SVCO2, SVCO) apparaissant lors de la régénération d'un signal d'horloge (CL0, CL1, CL2, CL) est le signal pour la commande de fréquence (SVCO0 SVC01, SVCO2, SVCO) d'un oscillateur à commande par tension (VCO0, VCO1, VCO2, VCO), lequel détermine la fréquence d'un signal d'horloge (CL0, CL1, CL2) comme fonction du signal pour la commande de fréquence (SVCO0, SVCO1, SVCO2, SVCO).

**14.** Procédé selon revendication 13,
**caractérisé**
**en ce que** changes de l'intégral du signal pour la commande de fréquence (SVCO0, SVCO1, SVCO2, SVCO) sont déterminés comme signal de mesure (f0($\Omega$), f1($\Omega$), f2($\Omega$)).

**15.** Procédé selon une des revendications 10 à 14,
**caractérisé**
**en ce que** la polarisation d'un premier signal optique (OS0) est randomisée.

**16.** Procédé selon une des revendications 10 à 14,
**caractérisé**
**en ce qu'**une modulation differentielle de phases (DPM) entre au moins deux autres signaux optiques ayants des polarisations differentes (OS1, OS2) est générée dans un émetteur optique commun (TX).

**17.** Procédé selon revendication 16,
**caractérisé**
**en ce que** les autres signaux optiques (OS1, OS2) possèdent une enveloppe laquelle n'est pas constante pendant une duration d'un bit.

**18.** Procédé selon une des revendications précédentes,
**caractérisé**
**en ce qu'**un signal de commande de PMD (SPMDC0, SPMDC1, SPMDC2, SPMDC), gagné du signal de mesure (f0($\Omega$), f1($\Omega$), f2($\Omega$), f3($\Omega$)), commande un compensateur de dispersion modale de polarisation (PMDC0, PMDC1, PMDC2, PMDC).

FIG 1

FIG 2

EP 1 371 154 B1

FIG 3

FIG 4

FIG 5

FIG 6

FIG 7

FIG 8

FIG 9

FIG 10